# EUROPÄISCHE PATENTSCHRIFT

(11) **EP 3 056 095 B1**
(45) Veröffentlichungstag und Bekanntmachung des Hinweises auf die Patenterteilung: **27.03.2019**
(21) Anmeldenummer: 16000328.1
(22) Anmeldetag: 10.02.2016
(51) Int. Cl.: A23L 13/00, A23L 17/00

(54) **UMHÜLLTE NAHRUNGSMITTELZUBEREITUNG**
WRAPPED FOOD PRODUCT
PRODUIT ALIMENTAIRE ENVELOPPÉ

(30) Priorität: 10.02.2015 DE 202015000972 U
(43) Veröffentlichungstag der Anmeldung: 17.08.2016
(73) Patentinhaber: "Deutsche See" GmbH, 27572 Bremerhaven (DE)
(72) Erfinder: Volkelt, Martin, 27721 Ritterhude (DE)
(74) Vertreter: Hoffmann Eitle

(56) Entgegenhaltungen:
- WO-A1-97/39950
- CN-A- 101 396 079
- CN-A- 102 258 144
- CN-U- 201 758 736
- DE-A1- 3 437 441
- DATABASE GNPD [Online] MINTEL; Januar 2013 (2013-01), Anonymous: "Gourmet Haddock Fillets", XP002756210, Database accession no. 1980016
- DATABASE GNPD [Online] MINTEL; Januar 2015 (2015-01), Anonymous: "Filled Plaice Fillet", XP002756211, Database accession no. 2890287
- DATABASE GNPD [Online] MINTEL; Januar 2015 (2015-01), Anonymous: "Bacon Wrapped Filet of Beef", XP002756212, Database accession no. 2921115
- DATABASE GNPD [Online] MINTEL; Januar 2013 (2013-01), Anonymous: "Bacon Rolled Salmon Skewer", XP002756213, Database accession no. 1976955
- DATABASE GNPD [Online] MINTEL; November 2006 (2006-11), Anonymous: "Bacon Wrapped Squat Lobster", XP002756214, Database accession no. 614511
- DATABASE GNPD [Online] MINTEL; Oktober 2014 (2014-10), Anonymous: "Pork Saltimbocca", XP002756215, Database accession no. 2737353
- DATABASE GNPD [Online] MINTEL; Dezember 2014 (2014-12), Anonymous: "Chicken & Chorizo", XP002756216, Database accession no. 2852865
- Anonymous: "Fisch grillen-Tipps & Tricks", , 29 April 2014 (2014-04-29), Retrieved from the Internet: URL:https://www.deutschesee.de/rezepte/tip ps-von-profis/grillfibel-tipps-tricks-zum- fischgrillen/ [retrieved on 2018-02-06]
- google: , 20 April 2014 (2014-04-20), Retrieved from the Internet: URL:https://www.google.de/search?dcr=0&biw =1707&bih=845&tbs=cdr%3A1%2Ccd_min%3A1%2F1 %2F1990%2Ccd_max%3A02-10-2015&ei=zrd5WtmsN JHKwALh7YOoBQ&q=+grillhaut&oq=+grillhaut&g s_l=psy-ab.3..0i7i30k1l2j0i7i10i30k1.7567. 7567.0.7791.1.1.0.0.0.0.84.84.1.1.0....0.. .1c.1.64.psy-ab..0.1.84....0.4I4939bFJj4 [retrieved on 2018-02-06]
- Anonymous: , Retrieved from the Internet: URL:https://www.deutschesee.de/produkte/sp ezialitaeten/kabeljau-lemon-in-grillhaut/# steps [retrieved on 2018-02-06]

## Beschreibung

Die vorliegende Erfindung betrifft eine Nahrungsmittel-Zubereitung aus Fisch zum Grillen.
Grillen ist eine weit verbreitete Freizeitbeschäftigung. Verbreitet werden dazu vom Händler bereits möglichst weitgehend vorbereitete Nahrungsmittel verwendet. Bratwurst etwa ist so präpariert, dass sie aus der Handelsverpackung genommen und ohne Weiteres auf den Grill gelegt werden kann. Grillfleisch wird verbreitet so angeboten, dass es, zunächst selbstverständlich in Portionsgröße zugeschnitten, auch zum Filet verarbeitet (nämlich von Knochen befreit) und oftmals auch in eine Sauce (Marinade, Beize, Kräuterfarce oder dergleichen) eingelegt ist. Auch dies kann dann so aus der Handelsverpackung entnommen und ohne Weiteres auf den Grill gelegt werden.
Handelt es sich bei dem Grillfleisch um Fisch, entsteht bei manchen Fischsorten das Problem, dass es beim Garen auf dem Grill dazu neigt zu "zerfallen" und nur vorsichtig und/oder mittels Umhüllung in Alufolie als ein Stück vom Grill genommen und serviert werden kann.
Der vorliegenden Erfindung liegt die Aufgabe zugrunde, eine Nahrungsmittel-Zubereitung zu schaffen, die ein Abfallprodukt verwertet und größere aromatische Vielfalt bietet.

Diese Aufgabe wird von einer Nahrungsmittel-Zubereitung mit den Merkmalen des Anspruchs 1 gelöst. Bevorzugte Ausgestaltungen sind in den Unteransprüchen angegeben.
Erfindungsgemäß ist eine Nahrungsmittel-Zubereitung zum Grillen dadurch gekennzeichnet, dass ein Stück präpariertes Nahrungsmittel in einen Mantel aus geräucherter Fischhaut eingewickelt ist, die von geräuchertem Fischfleisch abgetrennt ist. Räucherhaut von Fisch wie zum Beispiel Räucherlachs, -forelle oder - aal ist insbesondere bei der industriellen Herstellung dieser Nahrungsmittel (die dann von der mitgeräucherten Haut abgetrennt, portioniert und verpackt werden) ein Abfallprodukt, dessen Verwertung gewerblich vorteilhaft ist.
Beim Zubereiten der erfindungsgemäßen Nahrungsmittel-Vorbereitung gibt die geräucherte Haut ihr Aroma an das Stück präpariertes Nahrungsmittel ab und trägt so zu dessen aromatischer Bereicherung bei. Bei der Zubereitung der erfindungsgemäßen Nahrungsmittel-Zubereitung durch Erwärmung zum Beispiel auf einem Grill kann dieser Aromaeffekt durch die Wärmeeinwirkung noch verstärkt werden.
Je nach Art und Beschaffenheit des Stücks präparierten Nahrungsmittels hat der erfindungsgemäße Mantel noch zusätzlich die vorteilhafte Wirkung, das Stück präpariertes Nahrungsmittel zum Beispiel als Portion zusammen zu halten da Fisch etwa beim Garen auf dem Grill dazu neigt zu "zerfallen". Erfindungsgemäß lässt es sich nun vorteilhaft einfach in dem Mantel aus geräucherter Haut als ein Stück vom Grill nehmen und servieren. Vorzugsweise mit der Außenseite der Haut nach außen um das Stück präparierten Nahrungsmittels gewickelt (so dass das Räucheraroma von der Innenseite der Haut auch direkt in das Stück präparierten Nahrungsmittels dringen kann), kann dies noch dazu vorteilhaft dekorativ aussehen. Das präparierte Nahrungsmittel ist ein Stück Fisch wie zum Beispiel Lachs oder etwa auch Seelachs, Alaska-Seelachs, Kabeljau, Pangasius, Tilapia, Rotbarsch, Schellfisch, Schollenfilets, Seeteufel, Makrele, Forelle, Hoki oder Wels. Das präparierte Nahrungsmittel ist vorzugsweise ein Filet und/oder selbst auch geräuchert, wie der Mantel aus geräucherter Haut und/oder tiefgekühlt und/oder vorgegart.
Vorzugsweise ist das präparierte Nahrungsmittel ein Stück von gleichem Fleisch, wie das geräucherte Fleisch (und die davon abgetrennte geräucherte Haut) - also zum Beispiel ein Stück roher Lachs in Haut vom Räucherlachs (oder auch ein Stück geräucherter Lachs in Haut vom Räucherlachs - dann kann es sich sogar nicht nur um den gleichen Fisch sondern um dasselbe Stück Fisch handeln). Erfindungsgemäß vorteilhaft ist jedenfalls die Verwertbarkeit der Haut eines Räucherprodukts, üblicherweise Abfall, zur Aromatisierung und/oder mechanischen Umhüllung und/oder Dekoration eines Stücks präparierten Nahrungsmittels.
Das präparierte Nahrungsmittel kann (unter dem Hautmantel und/oder an anderer Stelle) mindestens bereichsweise von einer Sauce, Marinade, Beize und/oder einer Kräuterschicht und/oder einer Aromen-Schicht umgeben sein. Die umgebende Schicht kann Früchte, insbesondere Obst und/oder Gemüse, und/oder tierische Bestandteile wie nur beispielsweise Butter, Käse, Schmalz, Speck und/oder Schinken, aber auch andere Lebensmittel-Zubereitungen und Zutaten jeglicher Art aufweisen. Der Mantel ist vorzugsweise mit mindestens einem Faden (und/oder einem Halm zum Beispiel von einem Kraut wie zum Beispiel Schnittlauch) umbunden und/oder einem Holzspieß durchdrungen und/oder mittels eines Nahrungsmittel-Klebstoffes zusammengehalten. Dies dient zum Halten des Mantels um das Nahrungsmittel-Stück, aber auch zur Dekoration. So kann der Mantel nämlich mit dem mindestens einem Holzspieß und/oder mittels des Nahrungsmittel-Klebstoffes, insbesondere eines proteinhaltigen und/oder stärkehaltigen Klebstoffes, und/oder des Fadens zusammengehalten werden. So kann mindestens ein Holzspieß diametral durch den im Wesentlichen zylindrischen, insbesondere überlappenden, Mantel positioniert sein. In einer anderen Ausführungsform kann der Mantel mittels Faden auch beispielsweise genäht oder, insbesondere ähnlich einer Roulade, umwickelt sein. Auch kann der Mantel mit einer Folie, insbesondere Aluminiumfolie, und/oder einem Netz stabilisiert sein, die dann vor der weiteren Zubereitung zu entfernen ist.

In einer bevorzugten Ausführungsform kann das Nahrungsmittel-Stück in einen im Wesentlichen zylindrischen Mantel aus geräucherter Haut, insbesondere überlappend, eingewickelt sein, zum Beispiel sozusagen als "Bauchbinde". Das Nahrungsmittel-Stück kann auch so überlappend eingewickelt sein, dass das Fleisch nahezu vollständig vom Mantel bedeckt ist. In einer alternativen Ausführungsform kann der Mantel aber auch nur teilweise den Fisch umgeben sein. Beispielsweise kann auch nur eine Seite des Fleisches, insbesondere eine Unterseite, von der Haut bedeckt sein. Auch kann der Mantel so groß sein, dass er das Nahrungsmittel-Stück nahezu genau zum Beispiel auch stirnseitig umschließt.

Der Mantel kann aus einem Stück Haut sein oder aber auch aus mehreren Stücken bestehen. Beispielsweise können auch mehrere, zum Beispiel zwei Nahrungsmittel-Stücke von einem Stück Haut umgeben sein, und/oder umgekehrt ein Stück des erfindungsgemäßen Nahrungsmittel-Präparats von mehreren Stücken Haut. Auch kann der Mantel mehrere Schichten aufweisen, auch aus Haut von unterschiedlichem Fleisch.

Des Weiteren kann der Mantel strukturiert und/oder in einem Muster geschnitten sein und/oder eine, zum Beispiel gefächerte und/oder netzartige, Struktur besitzen. Eine solche Ausführungsform kann insbesondere vorteilhaft sein, wenn das Fleisch, insbesondere das Fischfleisch, beispielsweise aus Gründen der Zubereitung und/oder aus optischen Gründen, nicht vollständig umgeben sein soll. Ein solcher Mantel kann seinen Inhalt, das Nahrungsmittel-Stück, sichtbar machen. In einer besonderen Ausgestaltung kann der Mantel eine Struktur, beispielsweise ein eingeprägtes oder ausgeschnittenes Ornament zum Beispiel in Form eines Fisches, aufweisen, die auf den Inhalt der Zubereitung hinweist. Auch kann der Mantel (insbesondere mit Lebensmittelfarbe) bedruckt oder mittels Brandzeichen gekennzeichnet sein. Insbesondere kann der Name des Artikels, der Inhalt der Fleisch-Zubereitung, der Herstellername und/oder ein Logo auf dem Mantel aufgedruckt und/oder eingebrannt und/oder aus dem Mantel ausgeschnitten sein.

Insgesamt ergibt sich ein erfindungsgemäßes Nahrungsmittel-Präparat, dass sich einzeln oder zu mehreren, tiefgefroren, getrocknet oder frisch, zum Beispiel in einem Karton oder in einer Verpackung aus Kunststoff, etwa einer Schale mit abziehbarem durchsichtigen Deckel, auch mit bedruckter Banderole und/oder Umverpackung, in den Handel bringen lässt. So kann es dann zum Beispiel zum Grillen als vom Produzenten bereits vollständig vorbereitetes Nahrungsmittel verwendet werden. Es braucht nur noch aus der Handelsverpackung genommen und auf den Grill gelegt zu werden. Es ist dazu vorzugsweise in Portionsgröße zugeschnitten, kann zu Filet verarbeitet (nämlich von Knochen, Gräten, Schalen, Fasern, oder Stielen möglichst vollständig befreit) und auch in eine Sauce (Marinade, Beize, Kräuterfarce oder dergleichen) eingelegt sein. Es kann also ohne weiteres Vorbereiten auf den Grill gelegt werden.

Diese und weitere Merkmale und Vorteile der vorliegenden Erfindung werden mit Bezug auf die beigefügten Zeichnungen von Ausführungsbeispielen der vorliegenden Erfindung weiter beschrieben. In den Zeichnungen zeigen:
- Figur 1: zeigt eine räumliche Ansicht einer erfindungsgemäßen Nahrungsmittel-Zubereitung und
- Figur 2: zeigt eine andere räumliche Ansicht der erfindungsgemäßen Nahrungsmittel-Zubereitung aus Figur 1.

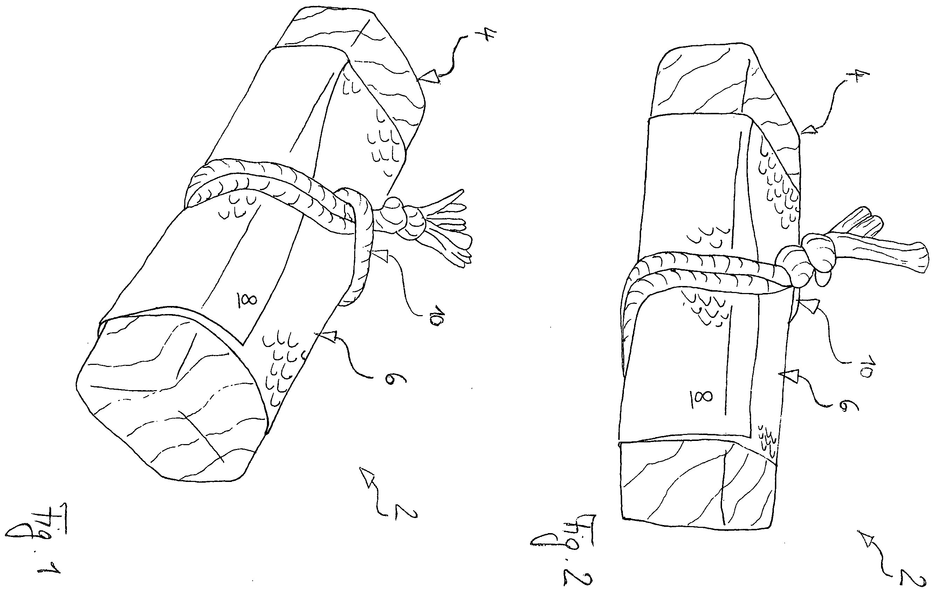

Die Figuren 1 und 2 zeigen eine erfindungsgemäße Nahrungsmittel-Zubereitung 2. Ein quaderförmiges Stück roher Fisch (Lachs) 4 ist teilweise von einem Mantel 6 aus geräucherter Haut 6 umgeben. Der Fisch 4 ist nämlich in den im Wesentlichen zylindrischen Mantel 6 eingewickelt, wobei der Mantel 6 zumindest teilweise 8 überlappt. Von der Länge des Stücks Lachs 4 schauen zu beiden Seiten noch etwa ein Sechstel der Länge aus der Umwicklung durch den Mantel 6 heraus.

Überall auf dem Stück Lachs 4 auch zwischen dem Fisch 4 und dem Mantel 6 befindet sich eine Sauce (nicht dargestellt).

Der Mantel 6 wird durch eine Kordel aus Lebensmittelfaden 10 zusammengehalten, die um den Mantel 6 herum gebunden und zugeknotet ist.

## Patentansprüche

1. Nahrungsmittel-Zubereitung, **dadurch gekennzeichnet, dass** ein Stück (4) Fischfleisch als zum Grillen präpariertes Nahrungsmittel in einen Mantel (6) aus geräucherter Fischhaut eingewickelt ist, die von geräuchertem Fischfleisch abgetrennt ist.

2. Nahrungsmittel-Zubereitung nach dem vorhergehenden Anspruch **dadurch gekennzeichnet, dass** das präparierte Nahrungsmittel (4) ein Filet und/oder geräuchert und/oder tiefgekühlt und/oder vorgegart ist.

3. Nahrungsmittel-Zubereitung nach einem der vorhergehenden Ansprüche, **dadurch gekennzeichnet, dass** das präparierte Nahrungsmittel (4) ein Stück von gleichem Fleisch ist, wie das geräucherte Fleisch und die davon abgetrennte geräucherte Haut.

4. Nahrungsmittel-Zubereitung nach einem der vorhergehenden Ansprüche, **dadurch gekennzeichnet, dass** das präparierte Nahrungsmittel (4) mindestens bereichsweise von einer Sauce und/oder einer Kräuterschicht umgeben ist.

5. Nahrungsmittel-Zubereitung nach einem der vorhergehenden Ansprüche, **dadurch gekennzeichnet, dass** der Mantel (6) mit mindestens einem Faden (10) und/oder einem Holzspieß und/oder mittels eines Nahrungsmittel-Klebstoffes zusammengehalten ist.

## Claims

1. Food product, **characterised in that** a portion (4) of fish meat is wrapped in a casing (6) of smoked fish skin which has been separated from smoked fish meat to create a food product prepared for grilling.

2. Food product according to the preceding claim, **characterised in that** the prepared foodstuff (4) is a fillet and/or is smoked and/or deep-frozen and/or precooked.

3. Food product according to one of the preceding claims, **characterised in that** the prepared foodstuff (4) is a portion of the same meat as the smoked meat and the smoked skin separated therefrom.

4. Food product according to one of the preceding claims, **characterised in that** the prepared foodstuff (4) is at least in part covered by a sauce and/or a herb layer.

5. Food product according to one of the preceding claims, **characterised in that** the casing (6) is held together by at least one thread (10) and/or a wooden skewer and/or by means of a foodstuff adhesive.

## Revendications

1. Préparation de produit alimentaire, **caractérisée en ce qu'**un morceau (4) de chair de poisson est enveloppé comme produit alimentaire préparé pour être grillé dans une enveloppe (6) en peau de poisson fumée qui est séparée de la chair de poisson fumée.

2. Préparation de produit alimentaire selon la revendication précédente, **caractérisée en ce que** le produit alimentaire préparé (4) est un filet et/ou est fumé et/ou surgelé et/ou précuit.

3. Préparation de produit alimentaire selon l'une quelconque des revendications précédentes, **caractérisée en ce que** le produit alimentaire préparé (4) est un morceau de la même chair que la chair fumée et que la peau fumée séparée de celle-ci.

4. Préparation de produit alimentaire selon l'une quelconque des revendications précédentes, **caractérisée en ce que** le produit alimentaire préparé (4) est entouré au moins par endroits d'une sauce et/ou d'une couche de fines herbes.

5. Préparation de produit alimentaire selon l'une quelconque des revendications précédentes, **caractérisée en ce que** l'enveloppe (6) est assemblée avec au moins une ficelle (10) et/ou une brochette en bois et/ou au moyen d'une colle alimentaire.
